# EUROPEAN PATENT SPECIFICATION

(11) **EP 1 283 995 B1**
(45) Date of publication and mention of the grant of the patent: **19.11.2003**
(21) Application number: 01940701.4
(22) Date of filing: 25.05.2001
(51) Int. Cl.: G06F 9/445, H04B 1/40

(54) **MANAGEMENT MODULE FOR SOFTWARE DEFINED RADIO**
VERWALTUNGSMODUL FÜR SOFTWARE DEFINIERTES RADIO
MODULE DE GESTION POUR FONCTION RADIO ELECTRIQUE DEFINIE PAR LOGICIEL

(30) Priority: 26.05.2000 GB 0012779; 15.09.2000 GB 0022674
(43) Date of publication of application: 19.02.2003
(73) Proprietor: ROKE MANOR RESEARCH LIMITED, Romsey, Hants SO51 0ZN (GB)
(72) Inventor: MEHTA, Mehul, Southampton Hampshire SO16 8DE (GB)
(74) Representative: French, Clive Harry
(86) International application number: GB0102378
(87) International publication number: WO01090891

(56) References cited:
- WO-A-01/02954
- US-A- 5 999 990
- MITOLA J: "TECHNICAL CHALLENGES IN THE GLOBALIZATION OF SOFTWARE RADIO" IEEE COMMUNICATIONS MAGAZINE, IEEE SERVICE CENTER. PISCATAWAY, N.J, US, vol. 37, no. 2, February 1999 (1999-02), pages 84-89, XP000804508 ISSN: 0163-6804

## Description

A software defined radio (SDR) equipment is any type of equipment containing a software defined radio. An example of such equipment is a software defined radio terminal, which is typically a portable device which can be programmed to perform any of a variety of functions. Some of these may be conventional "communications" functions such as mobile telephone or internet access whereas others may be less obviously communications related, such as a portable games device/console. This latter may, for example, be configurable by loading games software or updates over the air.

SDR is based on flexible software architecture. This allows the radio equipment (e.g., user terminal, base stations etc.) to be re-configured by downloading and implementing appropriate software. In other words, the radio equipment is software re-definable. As a result, a SDR can operate several different wireless communications standards, and also modify its behaviour whilst remaining in a given standard.

Existing software defined radios are configured according to the requirements of the network, and of the equipment itself. For example, the network may configure the equipment according to the capacity metrics of the network, or the air interface characteristics, available bandwidth or available radio spectrum. Typical air interfaces that could be used in such applications include: WAN such as GSM, DECT, UMTS; IEEE802.11a/b; and HIPERLAN/2. The equipment may itself impose certain restrictions on the available configurations, for example, according to its own capabilities, such as its power profile, processing power and memory capacity. Software defined radio equipment may take one of many different formats, for example, they may be hand-held, palm-top, lap-top or desk-top. Each of these will have its own characteristics which will influence the configuration applied to it.

Software defined radio equipment is often set up to include mobile telephony function. Either the equipment or the mobile telephone base station, or both of them, may be a suitable configured software defined radio. However, software defined radio equipment is not limited to such applications and may, indeed, be configured as any communicating device.

Software defined radio equipment may be described with reference to a seven layer OSI (Open Systems Interconnections) model, or protocol stack, as illustrated in Fig. 3. The model specifies agreements at a variety of abstraction levels, from bit transmission to high level application logic. Each layer defines one specific aspect of communication and uses the services of the layer beneath it. Each layer must know what services are provided by the layer beneath it, through an interface. In Fig. 3, the physical layer 10 (Layer 1) defines the protocol involved in the transmission of bits to and through a physical medium. The data link layer 12 (Layer 2) defines the protocol involved in the detection and correction of errors in a bit sequence. The network layer 14 (Layer 3) defines the protocol involved in the selection of a route for transmission of data from its source to its destination. The transport layer 16 (Layer 4) defines the protocol involved in breaking messages into packets, and ensuring the delivery of the messages. The session layer 18 (Layer 5) defines the protocol involved in providing dialogue control and synchronisation facilities. The presentation layer 20 (Layer 6) defines the protocol involved in structuring information and attaching semantics. The application layer 22 (Layer 7) provides miscellaneous protocols for common activities.

At present, no operator configuration is possible, beyond selection of the application. Once the application is selected, the network and equipment determine the configuration of the equipment, depending on a previously determined operator profile, such as the quality of service to be provided, the type of service available, and the tariff to be charged. These things are all determined by the operator's relationship with his service provider.

The present invention is defined in the attached claims. The features of the preamble of claim 1 are disclosed in US-A-5 999 990.

According to an aspect of the present invention, an operator entity is provided, to allow the user to reconfigure the equipment as he desires, as and when required.

According to another aspect of the present invention, a management module is provided within the software defined radio equipment, to operate the configuration of the equipment, according to network, operator and equipment requests and constraints.

Accordingly, the present invention provides a management module for an equipment containing software defined radio system. The management module comprises: an equipment interface for communicating with the equipment; a network interface for communicating with a network, which may for example be a network within the equipment; or a network of which the equipment forms a part; an operator interface for communicating with an operator such as a human user, or a programmable machine; and a stored set of command and control algorithms, responsive to received requests for reconfiguration by issuing reconfiguration commands over at least one of the equipment interface, the network interface and the operator interface.

The stored set of command and control algorithms may be arranged to be responsive to reconfiguration requests received over the respective interface from any of the equipment, the network and the operator.

The stored set of command and control algorithms may be arranged to be responsive to reconfiguration requests originating within the management module.

In response to a received reconfiguration request, the management module may issue reconfiguration commands over the associated interfaces to at least one of the equipment, the network and the operator.

In response to a received reconfiguration request, the management module may verify capabilities of at least one of: the network; the operator; and the equipment prior to issuing any reconfiguration commands.

The present invention also provides a software defined radio terminal comprising a management module as described.

The present invention also provides an operator comprising a management module as described.

The present invention also provides a network infrastructure comprising a management module as described.

The present invention also provides a software defined radioterminal, comprising at least one management module as described. The present invention also provides a system comprising at least one management module as described in association with at least one of: an equipment; an operator; and a network.

The above, and further, objects, characteristics and advantages of the present invention will become more apparent with reference to the following description of certain embodiments of the invention, given by way of example only, in conjunction with the accompanying drawings, wherein:
Fig. 1 shows a schematic diagram of a management module of the present invention;
Fig. 2 shows a communications system according to the present invention, incorporating a network, an operator and SDR equipment, including management modules of the present invention; and
Fig. 3 shows a conceptual diagram of the various layers included in a communications protocol.

According to an aspect of the present invention, there is provided a Management Module (MM), which is effectively an intelligent management entity of the SDR equipment. It defines the functionality, behaviour, and state of the re-configurable system. It is administers re-configuration, including all the associated network and radio signalling and control mechanisms. In addition, it provides formal procedures for handling and implementing command and control signals from the operator (equipment user), the network, and the equipment itself.

The SDR equipment which houses the MM may be a user equipment, part of the network infrastructure, or an autonomous device which may not be connected to any communications network.

According to an aspect of the present invention, a user entity is provided, to allow the user to reconfigure the equipment as he desires, as and when required. This will allow the user to adapt the quality of service he receives according to his current quality of service requirements. This may allow the user to select between service providers as a function of tariff, coverage, availability and quality of service, in line with the user's current required use of the equipment.

According to another aspect of the present invention, each equipment, and the network, may each be provided with a management entity, or management module (MM) which is responsive to configuration requests from any of the user, the equipment or the network.

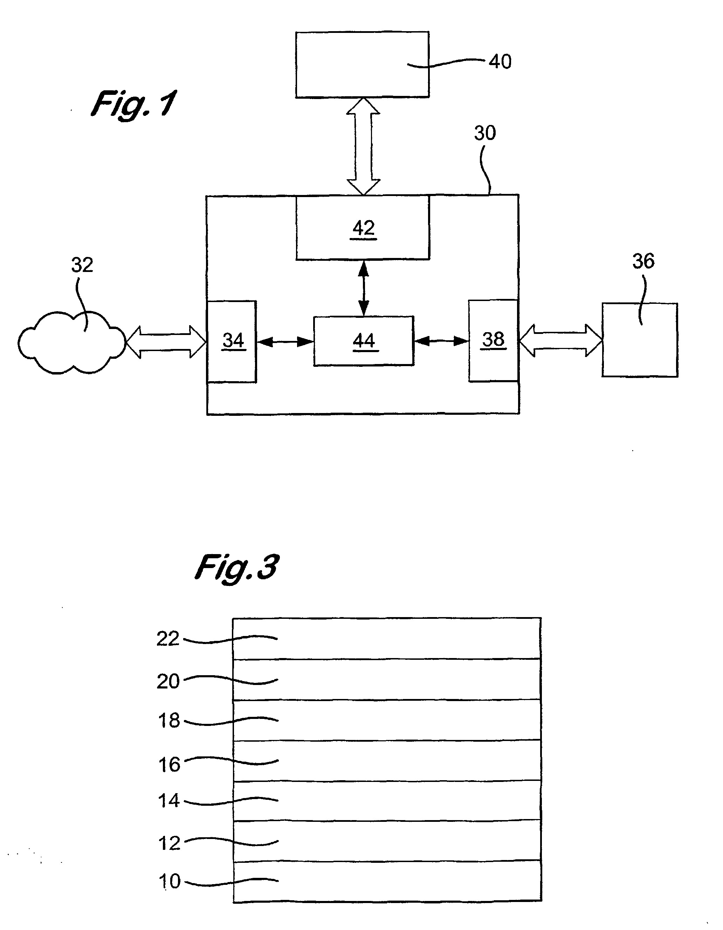

A management entity is proposed for a SDR. Fig. 1 is a schematic diagram of an embodiment of the Management module according to the invention.

Fig.1 shows a management module MM, 30 which is linked to an SDR equipment 36 by an equipment interface 38. Both the management module 30 and the SDR equipment may be respectively implemented in either hardware or software. The management module is also linked to a network 32 through a network interface 34. In addition, and according to an aspect of the present invention, the management module is also linked to an operator (user) 40 through an operator (user) interface 42. Within the management module, a set of command and control algorithms 44 link the various interfaces, and provide the necessary command and control operations.

Referring to Fig. 1, operator interface 42 defines formal procedures for signalling and control to/from the SDR operator 40. The 'operator' of the SDR equipment may be man or machine. In other words, the SDR equipment may be a user equipment (i.e., operated by man) or be part of the network infrastructure (i.e., operated by machine), in which case it may be run by another equipment.

The SDR Equipment Management Module 30 communicates with the network 32 through the network interface 34, with the SDR equipment 36 through the equipment interface 38 and with the SDR operator 40 through the operator interface 42. It communicates in accordance with its command and control algorithms 44.

Communication with the SDR operator 40 may include user interface control, re-configuration requests and acknowledgements, user profiles, application and quality of service control, and power management such as user interrupt and signalling functions.

Communication with the SDR equipment 36 may include power management, re-configuration negotiations and administration, equipment mode control, software download control, equipment application control, run-time control signalling, equipment class (capability list) and equipment resources (RF, input/output, hardware).

Communication with the network 32 may include higher layer signalling, network negotiations, power management, re-configuration management and administration, run-time control signalling, mode control and software download. The network may be either wired or wireless.

While all of the entities operator 40, network 32 and equipment 36 may request reconfiguration, a three-way trade-off has to be calculated in order to offer the optimum service to the particular user, without excessively disadvantaging other users of the network. For example, the operator 40 may request increased quality, for which he is prepared to pay a higher tariff, but which will require a greater bandwidth to be assigned to that user. This request must be balanced against the network's requirement to keep sufficient bandwidth available for other users. On the other hand, the network 32 may request a reduction in allocated bandwidth, leading to a reduction in quality of service due to an overall shortage of bandwidth. This needs to be balanced against the user's requirements and possible dissatisfaction from a perceived drop in quality of service. The equipment 36 itself may request reconfiguration such as a reduction in transmit power due to a detected low battery charge state. This needs to be balanced against the user's conflicting requirements for long battery life and high quality communication.

The Equipment Interface 38 defines formal procedures for signalling and control of the SDR equipment 36. The equipment 36 may be defined purely in hardware, or software, or a combination of both.

The Network Interface, 34 is provided, for use of the SDR equipment as part of a network (e.g., user equipment, or base station). It defines formal procedures for signalling and control between the equipment 36 and the network 32.

The Control Algorithms 44 are a set of algorithms, which in combination perform the logical decision making, signalling, monitoring, and control of the SDR equipment 36 in compliance with the network 32 (if any), the user 40 (man or machine) and the equipment itself.

The management entity 30 is the overall authority of the SDR equipment. It is responsible for run-time behaviour and performance, and for administering and managing any requested re-configuration. Reconfiguration may occur at any level of the protocol stack (Fig.3), with or without knowledge of the user 40 and/or network 32.

In preferred embodiments of the invention, the management entity MM 30 may also initiate re-configuration itself. For example, the MM may decide, based on the channel state condition, that there is sufficient scope to relax the FEC (forward equivalence class) encoder/decoder strength. Then, it may request that the FEC encoder/decoder of the SDR equipment 36 be re-configured. However, such re-configurations will need network 32 approval, to ensure that the network has sufficient available capabilities to service the proposed reconfiguration. Correspondingly, the available capabilities of the operator and the equipment may also need to be checked, to ensure that the proposed reconfiguration will be correctly serviced.

The management entity (MM) will also be responsible for managing the equipment's resources, including: Processing power and Memory Power, and the User Interface.

It will co-ordinate and monitor the applications 22 that are running on the equipment 36, and carry out negotiations between the equipment 36 and the network 32.

Such negotiations may include any of the following functions.

Various signalling operations are performed between the equipment and the network, to define operating parameters and quality of service, as required. Network approval is sought for certain types of re-configurations. For example, if parts of the baseband sub-system of the equipment 36 are to be modified, then it is mandatory that network approval be obtained before such re-configuration is completed : otherwise, the equipment may not comply with the host network. For this reason, the available network capabilities must be checked before reconfiguration is undertaken.

Communications relating to cross network handover, and signalling associated with that, are performed. For example, an SDR equipment may decide to switch transmissions from its current network to another one, in which case, the MM has to initiate and maintain signalling with both networks until it decides to fully transfer over to the new network.

The MM will maintain the equipment's capability list. The information included in such a list may include: hardware details, RF details, user interface details, manufacturer specific details, equipment class characteristics, and software details. Hardware details may include processor details (e.g., fixed/floating point, manufacturer details, speed), controller details, bus architecture, memory size and type. RF details may include filter banks and bandwidths, ADC/DAC converter resolution. Operator interface details may include video screen resolution, keypad, speech activation and other multi-media features. Equipment class characteristics may specify, for example, that the equipment may be palm top, lap top, cell phone type, transportable equipment, fixed equipment, base station or others. Software details may include manufacturer, version, installed software packages (e.g. WAP 1.1 version), configuration data of installed software packages, operating system, middleware package, protocols, and a security package.

The management entity must also perform run-time monitoring of the equipment's behaviour, in terms of power consumption, operator satisfaction (user profile) and network compliance.

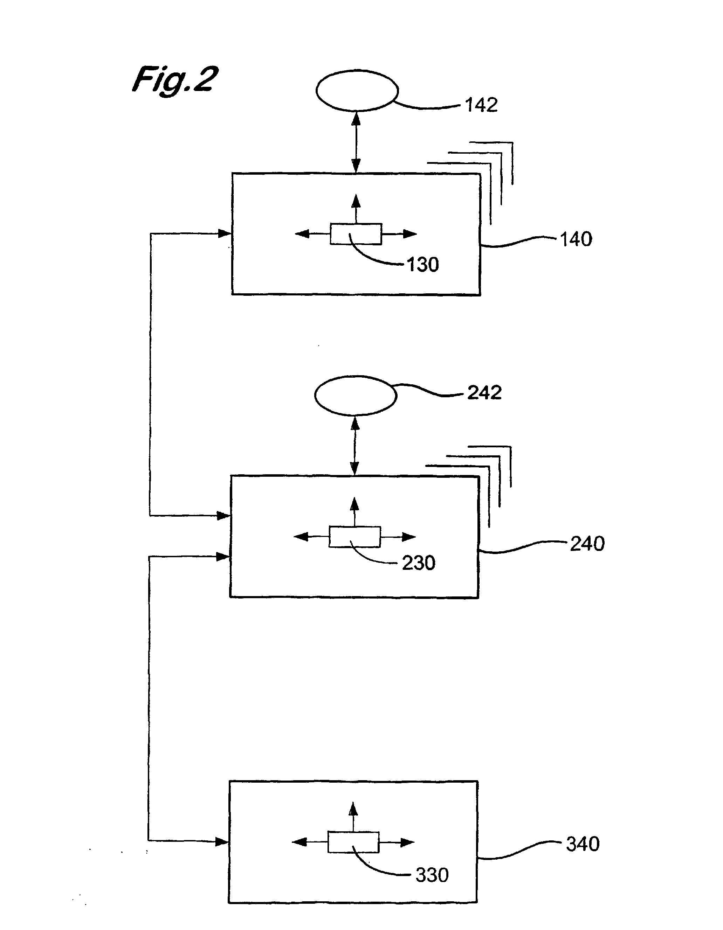

As illustrated in Fig. 2, a management module 130 may be provided in each of a number of SDR equipments, in this example, software defined radio terminals 140 incorporating a mobile telephony function. A management module 230 may be provided in each of a number of mobile telephone base stations 240, forming part of a network infrastructure of a mobile telephony network. A further management module 330 may be provided within a mobile switching centre 340, forming a further portion of an infrastructure of a mobile telephony network. Each of the management modules resides within its associated equipment 140; 240; 340 to exert control over reconfiguration of the equipment. Each management module contains a set of command and control algorithms, adapted to suit the associated equipment.

The terminals 140 each communicate with an operator 142 and a base station 240. In this case, the operator is a mobile telephone subscriber. In other examples, the operator may be a machine, itself incorporating a management module according to the present invention. The base stations 240 each communicate with a network operator 242 and the mobile switching centre 340. All of the devices 140, 240, 340 communicate over associated interfaces, exchanging control and signal data in order to offer a mobile telephony service. Each equipment can influence the operation of others. For example, the mobile switching centre may instruct each base station, while base stations may transmit and receive instructions to/from terminals 142. Each management module 130; 230; 330 receives signals originating within its associated equipment 140, 240, 340 to control a reconfiguration of the associated equipment. The reconfiguration will be managed according to control signals received from other equipment, but management modules 130, 230, 330 are not in direct mutual communication. They exert influence over each other only by reconfiguring their own equipment which may request reconfiguration of other pieces of equipment within the network.

While the present application has been described and defined in general terms, specific embodiments of the various functions defined and claimed will be apparent to those skilled in the art.

## Claims

1. A management module (30) for an equipment containing a software defined radio, comprising:
- an equipment interface (38) for communicating with the equipment (36);
- a network interface (34) for communicating with a network (32);
- an operator interface (42) for communicating with an operator entity (40); and
- a stored set of command and control algorithms (44), responsive to received requests for reconfiguration by issuing reconfiguration commands over at least one of the equipment interface, the network interface and the operator interface;
- **characterised in that** the management module is configured to:
- receive a reconfiguration request from at least one of: the operator entity, the network, the equipment and the management module itself;
- negotiate the requested configuration with at least one other of: the operator entity the network, the equipment and the management module itself; and
- issue the reconfiguration commands in accordance with limitations agreed during the negotiation.

2. A management module according to claim 1, wherein the stored set of command and control algorithms are arranged to be responsive to reconfiguration requests received over the respective interface from any of the equipment (36), the network (32) and the operator entity (40).

3. A management module according to claim 1 or claim 2, wherein the stored set of command and control algorithms are arranged to be responsive to reconfiguration requests originating within the management module.

4. A management module according to any of claims 2-3 wherein, in response to a received reconfiguration request, the management module issues reconfiguration commands over the associated interfaces to at least one of the equipment (36), the network (32) and the operator entity (40).

5. A management module according to claim 4 wherein, in response to a received reconfiguration request, the management module verifies capabilities of the network (32) prior to issuing any reconfiguration commands.

6. A management module according to claim 4 or claim 5 wherein, in response to a received reconfiguration request, the management module verifies capabilities of the equipment (36) prior to issuing any reconfiguration commands.

7. A management module according to any of claims 4-6 wherein, in response to a received reconfiguration request, the management module verifies capabilities of the operator entity (40) prior to issuing any reconfiguration commands.

8. A software defined radio terminal comprising a management module according to any preceding claim.

9. An operator entity comprising a management module according to any of claims 1-5.

10. A network infrastructure comprising a management module according to any of claims 1-5.

11. A system, comprising at least one management module according to any of claims 1-5 in association with each of an equipment, an operator entity and a network infrastructure.

12. A method for re-configuring an equipment containing a software-defined radio, said equipment comprising a management module for negotiating reconfigurations with the equipment, a network and an operator entity, said method comprising the steps of:
- receiving, in the management module, a request for reconfiguration from at least one of: the operator entity, the network, the equipment and the management module itself;
- negotiating the requested configuration with at least one other of: the operator entity, the network, the equipment and the management module; and
- issuing reconfiguration commands in accordance with limitations agreed during the negotiation.

## Patentansprüche

1. Verwaltungsmodul (30) für ein Gerät, das ein Software Defined Radio enthält, welches umfasst:
- eine Geräteschnittstelle (38) für die Kommunikation mit dem Gerät (36);
- eine Netzschnittstelle (34) für die Kommunikation mit einem Netz (32);
- eine Bedienerschnittstelle (42) für die Kommunikation mit einer Bediener-Einheit (40); und
- eine gespeicherte Menge von Befehls- und Steuerungsalgorithmen (44), die auf die empfangenen Anforderungen betreffs einer Neukonfigurierung reagieren, indem sie Rekonfigurationsbefehle über wenigstens eine der folgenden Schnittstellen ausgeben: die Geräteschnittstelle, die Netzschnittstelle oder die Bedienerschnittstelle;
**dadurch gekennzeichnet, dass** das Verwaltungsmodul so konfiguriert ist, dass es:
- eine Rekonfigurationsanforderung von wenigstens einem der folgenden Objekte empfängt: der Bediener-Einheit, dem Netz, dem Gerät oder dem Verwaltungsmodul selbst;
- die angeforderte Konfiguration mit wenigstens einem anderen der folgenden Objekte verhandelt: der Bediener-Einheit, dem Netz, dem Gerät oder dem Verwaltungsmodul selbst; und
- die Rekonfigurationsbefehle entsprechend den während der Verhandlung vereinbarten Einschränkungen ausgibt.

2. Verwaltungsmodul nach Anspruch 1, wobei die gespeicherte Menge von Befehls- und Steuerungsalgorithmen so beschaffen ist, dass diese auf Rekonfigurationsanforderungen reagieren, die über die jeweilige Schnittstelle von irgendeinem der folgenden Objekte empfangen werden: dem Gerät (36), dem Netz (32) oder der Bediener-Einheit (40) .

3. Verwaltungsmodul nach Anspruch 1 oder Anspruch 2, wobei die gespeicherte Menge von Befehls- und Steuerungsalgorithmen so beschaffen ist, dass diese auf Rekonfigurationsanforderungen reagieren, deren Ursprung sich innerhalb des Verwaltungsmoduls befindet.

4. Verwaltungsmodul nach einem der Ansprüche 2-3, wobei das Verwaltungsmodul in Reaktion auf eine empfangene Rekonfigurationsanforderung über die zugehörigen Schnittstellen Rekonfigurationsbefehle an wenigstens eines der folgenden Objekte ausgibt: das Gerät (36), das Netz (32) oder die Bediener-Einheit (40).

5. Verwaltungsmodul nach Anspruch 4, wobei das Verwaltungsmodul in Reaktion auf eine empfangene Rekonfigurationsanforderung, bevor es irgendwelche Rekonfigurationsbefehle ausgibt, die Eigenschaften des Netzes (32) überprüft.

6. Verwaltungsmodul nach Anspruch 4 oder Anspruch 5, wobei das Verwaltungsmodul in Reaktion auf eine empfangene Rekonfigurationsanforderung, bevor es irgendwelche Rekonfigurationsbefehle ausgibt, die Eigenschaften des Geräts (36) überprüft.

7. Verwaltungsmodul nach einem der Ansprüche 4-6, wobei das Verwaltungsmodul in Reaktion auf eine empfangene Rekonfigurationsanforderung, bevor es irgendwelche Rekonfigurationsbefehle ausgibt, die Eigenschaften des Geräts (36) überprüft.

8. Software Defined Radio Endgerät, das ein Verwaltungsmodul nach einem der vorhergehenden Ansprüche umfasst.

9. Bediener-Einheit, die ein Verwaltungsmodul nach einem der Ansprüche 1-5 umfasst.

10. Netzinfrastruktur, die ein Verwaltungsmodul nach einem der Ansprüche 1-5 umfasst.

11. System, das wenigstens ein Verwaltungsmodul nach einem der Ansprüche 1-5 in Verbindung mit jedem der folgenden Objekte umfasst: einem Gerät, einer Bediener-Einheit und einer Netzinfrastruktur.

12. Verfahren zur Neukonfigurierung eines Geräts, das ein Software Defined Radio enthält, wobei das besagte Gerät ein Verwaltungsmodul zum Verhandeln von Rekonfigurationen mit dem Gerät, einem Netz und einer Bediener-Einheit umfasst, wobei das besagte Verfahren die folgenden Schritte umfasst:
- Empfangen einer Anforderung betreffs einer Neukonfigurierung im Verwaltungsmodul von wenigstens einem der folgenden Objekte: der Bediener-Einheit, dem, Netz, dem Gerät und dem Verwaltungsmodul selbst;
- Verhandeln der angeforderten Konfiguration mit wenigstens einem anderen der folgenden Objekte: der Bediener-Einheit, dem Netz,. dem Gerät und dem Verwaltungsmodul; und
- Ausgeben von Rekonfigurationsbefehlen entsprechend den während der Verhandlung vereinbarten Einschränkungen.

## Revendications

1. Un module de gestion (30) pour un équipement comprenant une radio logicielle, avec :
- une interface équipement (38) pour communiquer avec l'équipement (36) ;
- une interface réseau (34) pour communiquer avec un réseau (32) ;
- une interface opérateur (42) pour communiquer avec une entité opérateur (40) ; et
- un set d'algorithmes de contrôle et de commande stocké (44), qui réagit aux demandes de reconfiguration reçues en émettant des commandes de reconfiguration au travers d'au moins une des interfaces équipement, réseau ou opérateur ;
Le module de gestion est configuré pour :
- recevoir une requête de reconfiguration d'au moins un des éléments suivants : l'entité opérateur, le réseau, l'équipement ou le module de gestion lui-même ;
- négocier la configuration demandée avec au moins un autre des éléments suivants : l'entité opérateur, le réseau, l'équipement ou le module de gestion lui-même ; et
- émettre les commandes de reconfiguration conformément aux limites définies durant les négociations.

2. Un module de gestion conforme à la spécification 1, dans lequel le set d'algorithmes de commande et de contrôle stocké est conçu pour réagir aux demandes de reconfiguration reçues via l'interface respective de l'équipement (36), du réseau (32) ou de l'entité opérateur (40).

3. Un module de gestion conforme à la spécification 1 ou 2, dans lequel le set d'algorithmes de contrôle et de commande stocké est conçu pour réagir aux requêtes de reconfiguration émanant du module de gestion.

4. Un module de gestion conforme aux spécifications 2-3 dans lequel le module de gestion répond à une requête de reconfiguration reçue en émettant des commandes de reconfiguration via au moins une des interfaces équipement (36), réseau (32) ou entité opérateur (40).

5. Un module de gestion conforme à la spécification 4 dans lequel le module de gestion répond à une requête de reconfiguration reçue en vérifiant les capacités du réseau (32) avant d'émettre toute commande de reconfiguration.

6. Un module de gestion conforme à la spécification 4 ou 5 dans lequel le module de gestion répond à une requête de reconfiguration reçue en vérifiant les capacités de l'équipement (36) avant d'émettre toute commande de reconfiguration.

7. Un module de gestion conforme aux spécifications 4 - 6 dans lequel le module de gestion répond à une requête de reconfiguration reçue en vérifiant les capacités de l'entité opérateur (40) avant d'émettre toute commande de reconfiguration.

8. Un terminal de radio logicielle comprenant un module de gestion conforme à toutes les spécifications mentionnées ci-dessus.

9. Une entité opérateur comprenant un module de gestion conforme aux spécifications 1-5.

10. Une infrastructure de réseau comprenant un module de gestion conforme aux spécifications 1-5.

11. Un système comprenant au moins un module de gestion conforme aux spécifications 1-5, associé à un équipement, une entité opérateur et une infrastructure réseau.

12. Une méthode de reconfiguration d'un équipement contenant une radio logicielle. Cet équipement comprend un module de gestion pour négocier les reconfigurations avec l'équipement, un réseau et une entité opérateur. La méthode peut :
- recevoir, dans le module de gestion, une requête de reconfiguration d'au moins un des éléments suivants : l'entité opérateur, le réseau, l'équipement ou le module de gestion lui-même ;
- négocier la configuration demandée avec au moins un autre des éléments suivants : l'entité opérateur, le réseau, l'équipement ou le module de gestion ; et
- émettre des commandes de configuration conformément aux limites définies durant la négociation.
